# EUROPEAN PATENT APPLICATION

(11) **EP 2 314 645 A1**
(43) Date of publication of application: **27.04.2011**
(21) Application number: 09806577.4
(22) Date of filing: 10.08.2009
(51) Int. Cl.: C08L 79/08, C08G 18/34, C08G 73/14, C08L 81/02

(54) **RESIN COMPOSITION**

(30) Priority: 11.08.2008 JP 2008207506
(71) Applicant: Mitsubishi Gas Chemical Company, Inc., Tokyo 100-8324 (JP)
(72) Inventor: YAMADA, Toshiaki, Tokyo 125-0051 (JP); BAN, Hajime, Tokyo 125-0051 (JP); YANAGISAWA, Kenichi, Yokkaichi-shi Mie 510-0886 (JP)
(74) Representative: HOFFMANN EITLE
(86) International application number: PCT/JP2009/003834
(87) International publication number: WO 2010/018681

(57) **Abstract**

The present invention provides a resin composition with favorable melt fluidity, sliding characteristics, toughness, mechanical strength, etc.

The present invention is directed to the resin composition containing an aromatic polyamide imide resin (A) that is obtained with the moisture content in the reaction system at 100 to 5000 ppm during the reaction to polymerize an aromatic tricarboxylate anhydride and a diisocyanate and for which the reduced viscosity in N,N-dimethyl acetamide at 30°C is 0.15 to 0.40 dL/g, and a polyarylene sulfide resin (B).

## Description

### TECHNICAL FIELD

The present invention relates to a novel resin composition containing an aromatic polyamide imide resin and a polyarylene sulfide resin which has excellent sliding characteristics, mechanical strength, toughness and melt fluidity.

### BACKGROUND ART

An aromatic polyamide imide resin (herein below, abbreviated as "PAI resin") is a plastic material which has excellent heat resistance, mechanical strength, electrical characteristics and chemical resistance as well as self-lubricating property. However, as the PAI resin has poor melt fluidity, for most of the PAI resins, it is difficult to perform injection molding. As such, for carrying out molding of the PAI resin, the general practice nowadays is to perform molding of the PAI resin according to compression molding method or to perform injection molding of a precursor of the PAI resin followed by performing a post-curing reaction of the injection molded article for a long period of time and use it as a molded article.

Meanwhile, the polyarylene sulfide resin (herein below, abbreviated as "PAS resin") which is represented by polyphenylene sulfide resin (herein below, abbreviated as "PPS resin") is characterized in that it has excellent heat resistance, electrical characteristics and solvent resistance, in particular, excellent melt fluidity. In addition, it is known that by enforcing the PAS resin using a filler, etc., excellent mechanical strength, stiffness and dimensional stability can be given to the PAS resin. However, as the PAS resin has relatively low glass transition temperature, its use for an application which requires excellent sliding characteristics at high temperature like 100°C or above has been limited.

In order to improve these disadvantages of the PAI and PAS resins, it is suggested in Patent Document 1 below that a resin composition having excellent heat resistance, mechanical strength and fluidity is obtained by compounding the PAS resin with the PAI resin which has been synthesized by reducing the moisture content in a reaction system during the synthesis. For instance, in the example, the PAI resin which has been synthesized with the moisture content in the reaction system at 20 to 30 ppm is used.

### PRIOR ART DOCUMENTS

### PATENT DOCUMENT

Patent Document 1: Japanese Patent Application Laid-Open (JP-A) No. 6-200154

### SUMMARY OF THE INVENTION

### PROBLEMS TO BE SOLVED BY THE INVENTION

With respect to the resin composition described above, the inventors of the present invention found the problems as follows. Specifically, the inventors found that, according to the resin composition above, as the molecular structure of the PAI resin is not appropriate for the PAS resin and a material having favorable melt fluidity, sliding characteristics, toughness and mechanical strength is not obtained after compounding, there are some cases in which the resin composition described above is insufficient for use as a sliding component or fine molding.
In view of the disadvantages described above, object of the invention is to provide a resin composition with favorable melt fluidity, sliding characteristics, toughness and mechanical strength, a method for producing the same and a molded article thereof.

### MEANS FOR SOLVING THE PROBLEMS

The inventors of the invention have conducted intensive studies to provide a resin composition containing the PAI resin and PAS resin with favorable melt fluidity, sliding characteristics, toughness and mechanical strength, and as a result, have found that by using as a PAI resin a product that is obtained with the moisture content in the reaction system at 100 to 5000 ppm for a reaction to polymerize an aromatic tricarboxylate anhydride and a diisocyanate, the problems described can be solved, and therefore achieved the invention.

Thus, the invention relates to the composition shown below, a molded article comprising the composition and a method of producing the resin composition.
(1) A resin composition containing an aromatic polyamide imide resin (A) that is obtained with the moisture content in the reaction system at 100 to 5000 ppm during the reaction to polymerize an aromatic tricarboxylate anhydride and a diisocyanate and for which the reduced viscosity in N,N-dimethyl acetamide at 30°C is 0.15 to 0.40 dL/g, and a polyarylene sulfide resin (B).
(2) The resin composition described in (1), in which the blend ratio of the aromatic polyamide imide resin (A) is 5 to 60% by weight and the blend ratio of the polyarylene sulfide resin (B) is 95 to 40% by weight when the total of the aromatic polyamide imide resin (A) and polyarylene sulfide resin (B) is 100% by weight.
(3) The resin composition described in (1) or (2), in which the moisture content in the reaction system is 500 to 5000 ppm.
(4) The resin composition described in any one of (1) to (3), in which the reduced viscosity of the aromatic polyamide imide resin (A) is 0.25 to 0.40 dL/g.
(5) A molded article comprising the resin composition described in any one of (1) to (4).
(6) A method of producing a resin composition containing an aromatic polyamide imide resin (A) and a polyarylene sulfide resin (B), wherein the aromatic polyamide imide resin (A) is produced such that the moisture content in the reaction system is 100 to 5000 ppm during the reaction to polymerize an aromatic tricarboxylate anhydride and a diisocyanate and the reduced viscosity in N,N-dimethyl acetamide at 30°C is 0.15 to 0.40 dL/g.
(7) The method of producing a resin composition described in (6), in which the resin composition is produced such that the blend ratio of the aromatic polyamide imide resin (A) is 5 to 60% by weight and the blend ratio of the polyarylene sulfide resin (B) is 95 to 40% by weight when the total of the aromatic polyamide imide resin (A) and polyarylene sulfide resin (B) is 100% by weight.
(8) The method of producing a resin composition described in (6) or (7), in which the moisture content in the reaction system is 500 to 5000 ppm during the reaction to polymerize an aromatic tricarboxylate anhydride and a diisocyanate.

### EFFECT OF THE INVENTION

The resin composition of the invention is excellent in that it has favorable melt fluidity, sliding characteristics, toughness and mechanical strength, and therefore it can be molded for various uses.

### MODE FOR CARRYING OUT THE INVENTION

The PAI resin as component (A) is expressed with the following general formula. 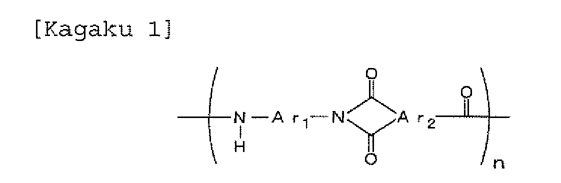 (Ar₁ represents a divalent aromatic group having 6 to 18 carbon atoms, a divalent alicyclic hydrocarbon group having 5 to 14 carbon atoms, Ar₂ represents a trivalent aromatic group having 6 to 18 carbon atoms, and n represents an integer of from 4 to 400).

Although the followings can be mentioned as a specific example of Ar₁, it can be used as a mixture of two or more.

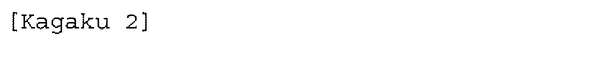

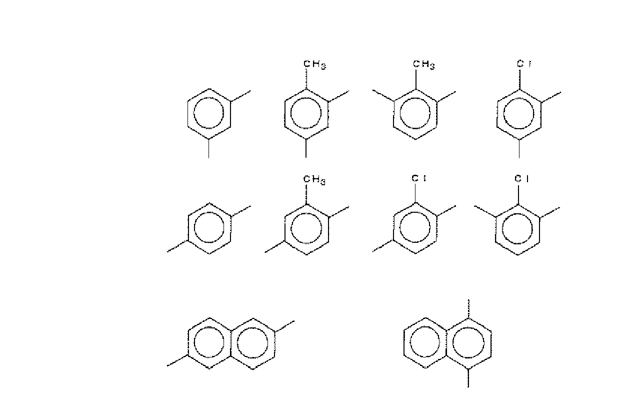

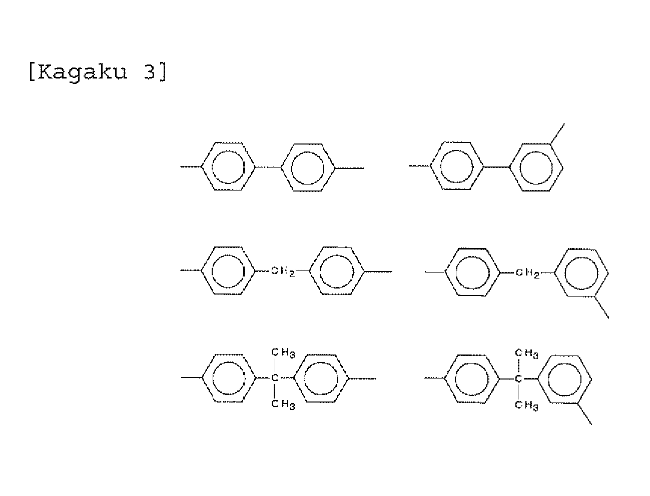

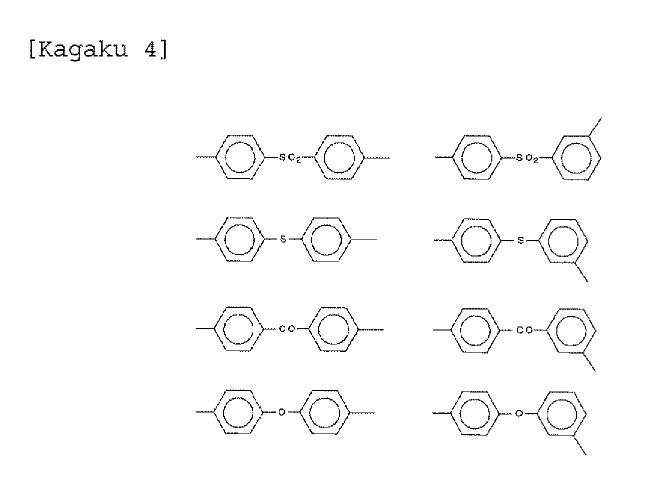

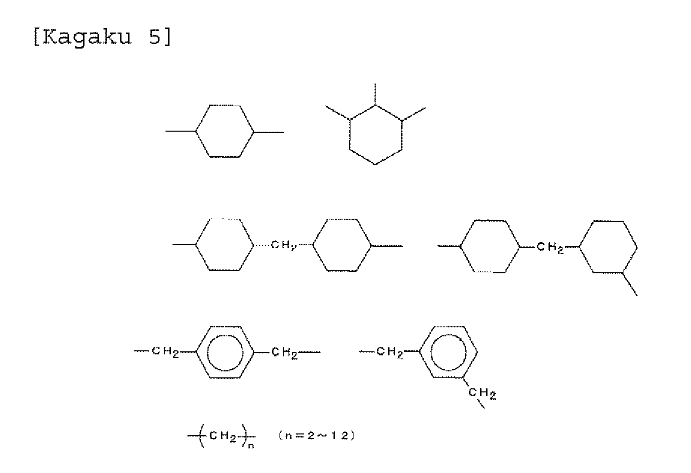

Among these, particularly preferred are those described below.

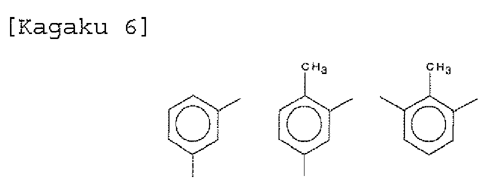

Although the followings can be mentioned as a specific example of Ar₂, it can be used as a mixture of two or more.

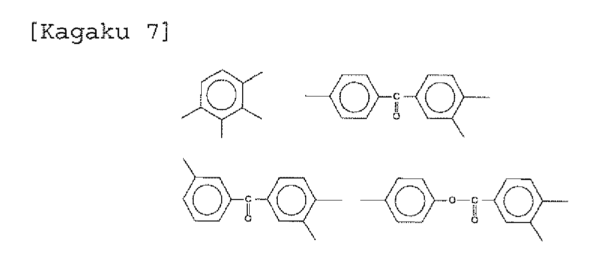

Among these, particularly preferred are those described below.

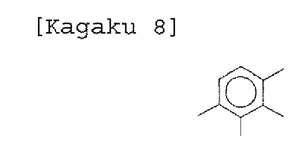

The reaction for polymerizing the PAI resin of the invention is an isocyanate method by which an aromatic tricarboxylate anhydride and an aromatic diisocyanate are subjected to polymerization reaction (for example, Japanese Patent Application Publication (JP-B) No. 44-19274). The PAI resin obtained by the method above is preferable in that ratio of an intramolecular production of an imide ring is high and the sliding characteristics, toughness and mechanical strength are excellent after compounding with the PAS resin.

At the time of polymerizing the PAI resin, it is preferable to use a solvent for stabilizing the reaction. As for the solvent for the polymerization, N-alkylpyrrolidone like N-methyl-2-pyrrolidone (NMP), etc., and an aprotic polar solvent like N,N-dimethylformamide (DMF), N,N-dimethylacetamide (DMAC), acetonitrile, tetrahydrofuran, diglyme, cyclohexanone, 1,4-dioxane, etc. are preferable because a polymer with high molecular weight can be easily obtained. The particularly preferred solvents are NMP, DMF and DMAC. These solvents can be used singly or as a mixture of two or more. It is also possible that a non-polar solvent which has compatibility with the aprotic polar solvent above can be mixed and used. For example, use of an aromatic hydrocarbon like toluene, xylene, solvent naphtha, etc. is possible. Ratio of the non-polar solvent in the mixed solvent is preferably 30% by weight or less.

The moisture content in the reaction system during polymerization of the PAI resin is 100 to 5000 ppm, preferably 500 to 5000 ppm, and most preferably 600 to 3000 ppm.

The reduced viscosity of the PAI resin of the invention is a value that is measured when the concentration of the PAI in DMAC at 30°C is 1 g/dl, and it is 0.15 to 0.40 dL/g, preferably 0.17 to 0.40 dL/g, particularly preferably 0.20 to 0.40 dL/g, and most preferably 0.25 to 0.40 dL/g.

Moreover, the PAS resin, that is, the component (B) used for the resin composition of the invention, is an aromatic polymer which has as a main constitutional element the arylene sulfide repeating unit that is represented by the formula [-Ar-S-] (with the proviso that -Ar- is an arylene group). The PAS resin may contain other constitutional unit depending on necessity. The PAS resin used in the invention is a polymer which generally contains 50 mol% or more, preferably 70 mol% or more, and more preferably 90 mol% or more of the above repeating unit. As for the arylene group, for example, a p-phenylene group, a m-phenylene group, a substituted phenylene group (the substituent group is preferably an alkyl group having 1 to 6 carbon atoms or a phenyl group), a p,p'-diphenylene sulfone group, a p,p' -biphenylene group, a p,p'-diphenylene carbonyl group, a naphthylene group, etc. can be mentioned.

As the PAS resin, a homopolymer which mainly has an identical arylene group can be preferably used. However, from the viewpoint of processability and heat resistance, a copolymer having two or more kinds of an arylene group can be also used.

Among these PAS resins, the PPS resin having the p-phenylene sulfide repeating unit as a main constitutional element is particularly preferable in that it has excellent processability and also it is industrially easily available. Other than that, polyarylene ketone sulfide, polyarylene ketone ketone sulfide, etc. can be also used.

As a specific example of the copolymer, a random or a block copolymer having the p-phenylene sulfide repeating unit and the m-phenylene sulfide repeating unit, a random or a block copolymer having the phenylene sulfide repeating unit and the arylene ketone sulfide repeating unit, a random or a block copolymer having the phenylene sulfide repeating unit and the arylene ketone ketone sulfide repeating unit and a random or a block copolymer having the phenylene sulfide repeating unit and the arylene sulfone sulfide repeating unit, etc. can be mentioned. These PAS resins are preferably a crystalline polymer. Moreover, the PAS resin is preferably a linear polymer from the viewpoint of toughness or strength. The PAS resin can be obtained by a well known method of polymerizing an alkali metal sulfide and a dihalogen-substituted aromatic compound in a polar solvent (for example, JP-B No. 63-33775).

As the alkali metal sulfide, for example, lithium sulfide, sodium sulfide, potassium sulfide, rubidium sulfide, cesium sulfide, etc. can be exemplified. Further, sodium sulfide, etc. which are obtained by reacting NaSH with NaOH in a reaction system can be also used. As the dihalogen-substituted aromatic compound, for example, p-dichlorobenzene, m-dichlorobenzene, 2,5-dichlorotoluene, p-dibromobenzene, 2,6-dichloronaphthalene, 1-metethoxy2,5-dichlorobenzene, 4,4'-dichloro biphenyl, 3,5-dichlorobenzoic acid, p,p'-dichlorodiphenyl ether, 4,4'-dichlorodiphenylsulfone, 4,4'-dichlorodiphenylsulfoxide, 4,4'-dichlorodiphenyl ketone, etc. can be mentioned. Each of these can be used singly or in combination of two or more.

In order to introduce some branch structures or cross-linked structures to the PAS resin, a small amount of a polyhalogen-substituted aromatic compound having at least three halogen substituent groups per molecule can be used in combination. As a preferred example of the polyhalogen-substituted aromatic compound, a trihalogen-substituted aromatic compound like 1,2,3-trichlorobenzene, 1,2,3-tribromobenzene, 1,2,4-trichlorobenzene, 1,2,4-tribromobenzene, 1,3,5-trichlorobenzene, 1,3,5-tribromobenzene, 1,3-dichloro-5-bromobenzene, etc. and alkyl substituent thereof can be mentioned. Each of these can be used singly or in combination of two or more. Among these, from the viewpoint of economical value, reactivity, physical property, etc., 1,2,4-trichlorobenzene, 1,3,5-trichlorobenzene and 1,2,3-trichlorobenzene are more preferable.

In general, under the purpose of having stable progress of the polymerization reaction, etc., a solvent for polymerization is used. As the solvent for polymerization, N-alkyl pyrrolidone like N-methyl-2-pyrrolidone, etc., and an aprotic organic amid solvent represented by 1,3-dialkyl-2-imidazolidinone, tetraalkyl urea, hexaalkyl phosphoric acid triamide, etc. are preferable in that the stability of the reaction system is high and a polymer having high molecular weight can be easily obtained. At least one kind of these solvents can be used.

The PAS resin used in the invention has the melt viscosity of 10 to 600 Pa·s in general, wherein the melt viscosity is measured at the temperature of 310°C and shear rate of 1200/sec. From the viewpoint of ensuring physical properties like more sufficient mechanical strength, toughness, etc. and sufficient melt fluidity, it is preferably 50 to 550 Pa·s, and more preferably 70 to 550 Pa·s. When two or more kinds of the PAS resin having different melt viscosity are used after blending, it is preferable that the melt viscosity of the blended product is within the above range. In addition, the PAS resin having the melt viscosity of 100 Pa·s or more is particularly preferable from the viewpoint of mechanical strength, toughness, etc.

As the PAS resin used for the invention, the resin obtained by washing after the completion of the polymerization can be used, and use of the resin treated with an aqueous solution containing an acid like hydrochloric acid, acetic acid, etc. or with a mixed solution of water and an organic solvent, or the resin treated with an aqueous solution of ammonium salt like ammonium chloride, etc., or the like is preferable. In particular, when the PAS resin which is subjected to the washing treatment until pH is 8 or less in a mixed solvent prepared to have acetone: water = 1 : 2 (volume ratio) is used, melt fluidity and mechanical properties of the resin composition can be further improved.

It is preferable that the PAS resin used for the invention is a particulate having an average particle diameter of 100 µm or more. When the average particle diameter of the PAS resin is too small, feed amount at the time of melt extrusion using an extruder is limited so that the residence time of the resin composition in an extruder is extended, and as a result, it may cause a problem like deterioration of the resin composition, etc. Furthermore, it is undesirable in terms of production efficiency.

The blend ratio of the PAI resin and the PAS resin in the resin composition of the invention relative to the total of the PAI resin and the PAS resin, that is, when the total of the PAI resin and the PAS resin is 100% by weight, is generally as follows. Specifically, the blend ratio of the PAI resin is 5 to 60% by weight and the blend ratio of the PAS resin is 95 to 40% by weight.
Furthermore, the blend ratio of the PAI resin is preferably 10% by weight or more, more preferably 15% by weight or more, still more preferably 20% by weight or more, and most preferably 30% by weight or more. Furthermore, the blend ratio of the PAI resin is preferably 55% by weight or less, and more preferably 50% by weight or less.
There is a tendency that, when the blend ratio of the PAI resin is more than 60% by weight, melt kneading is difficult, and when it is less than 5% by weight, enhancement in heat resistance and sliding characteristics is small. Moreover, when the blend ratio of the PAI resin is 20% by weight or more, the sliding characteristics can be enhanced more compared to a case in which it is less than 20% by weight.

The resin composition used for the invention is prepared by melt kneading of the PAI resin and the PAS resin. The temperature for melt kneading is 250 to 400°C, and preferably 280 to 360°C. The kneading can be carried out by using an extruder, a kneader, a Banburry mixer, a mixing roll, etc., but preferred method is a method using a twin-screw extruder.

The resin composition used for the invention may be appropriately blended with, if required, an additive like a filler, a pigment, a lubricating agent, a plasticizer, a stabilizing agent, a UV agent, a flame retardant and an auxiliary flame retardant, other resins, etc.

As an example of the filler, a mineral filler represented by glass bead, Wollastonite, mica, talc, kaolin, silicon dioxide, clay, asbestos, calcium carbonate, magnesium hydroxide, silica, diatomite, graphite, carborundum and molybdenum disulfide; glass fiber, milled fiber, carbon fiber, potassium titanate fiber, boron fiber, silicon carbide fiber, etc. can be mentioned. The filler may be blended in 1 to 70% by weight of the resin composition. Preferred filler is glass fiber, milled fiber, carbon fiber and potassium titanate fiber, and those treated with a silane coupling agent like urethane, amino type, etc. can be also suitably used.

As the pigment, carbon black, titanium oxide, zinc sulfide, zinc oxide, etc. can be exemplified.

As the lubricating agent, mineral oil, silicone oil, ethylene wax, polypropylene wax, montanic acid amide or a metal salt like sodium stearate, sodium montanate, etc., or the like can be exemplified.

As the plasticizer, a silane type compound that is commonly used, or a phthalic acid compound like dimethyl phthalate, dioctyl phthalate, etc., or the like can be exemplified. Furthermore, a UV absorbing agent, a coloring agent, etc. that are commonly used can be also used.

As the flame retardant, phosphate esters like triphenyl phosphate, brominated compounds like decabromo biphenyl, pentabromotoluene, a brominated epoxy resin, etc., a nitrogen-containing phosphorus compound like melamine derivatives, etc., and metal hydroxide like magnesium hydroxide, aluminum hydroxide, etc. can be exemplified.
The auxiliary flame retardant can be also used, and as an example thereof, a compound like antimony, boron, zinc, etc. can be mentioned.

As an example of other resin, an epoxy resin, a phenoxy resin, polyesters like polyethylene terephthalate, polybutylene terephthalate, etc. a fluorine resin like tetrafluoroethylene, etc., and an aromatic resin like polyphenylene ether, polysulfone, polycarbonate, polyether ketone, polyether imide, polythioether ketone, polyether ether ketone, etc. can be mentioned.

Moreover, regarding the molded article of the resin composition of the invention, an article having the optimum shape can be molded within a broad range according to the use, including a plate shape, a rod shape, a ball shape, a sheet shape, a film shape, a hollow shape, a gas fine-dispersion shape, a foamed article, a fiber shape, a pellet shape, etc. Regarding the method of molding these molded articles, it is possible to carry out the molding according to a well known method like injection molding, sheet molding, blow molding, injection blow molding, inflation molding, press molding, extrusion molding, foaming molding, film molding, etc. A secondary processing and molding like pressure molding, vacuum molding, etc. can be also employed.

As the resin composition of the invention has favorable melt fluidity, sliding characteristics, toughness, and mechanical strength, it is particularly useful for the use such as a sliding bearing, a rolling bearing, a gear, a cam, etc.

### EXAMPLES

The invention is explained in greater detail in view of the examples, but the invention is not limited by the examples. In addition, the PAI resin used for the following Examples and Comparative examples were prepared according to the Synthetic examples that are described below.

### <Synthetic example 1>

3000 g of N-methylpyrrolidone with the moisture content of 15 ppm were added to a 5-liter reactor equipped with a stirrer, a thermometer and a reflux condenser having a drying tube filled with calcium chloride at the top. 555 g (50 mol%) of trimellitic anhydride followed by 503 g (50 mol%) of 2,4-tolylene diisocyanate and 2.955 g of pure water were added thereto. Then, moisture content in the system was measured by using a Karl Fisher moisture analyzer. As a result, the moisture content in the system after the addition of pure water was 1000 ppm. First of all, the temperature of the content was adjusted to 120°C from the room temperature over 30 minutes, and the polymerization reaction was continued for 8 hours while maintaining the same temperature. Upon the completion of the polymerization reaction, the polymerization liquid was added to methanol having twice as much volume as N-methylpyrrolidone under vigorous stirring to precipitate the polymer. The precipitated polymer was filtered under suction, washed well with methanol and dried at 200°C under reduced pressure to obtain the PAI resin. With this PAI resin, the PAI resin concentration in N,N-dimethyl acetamide at 30°C was set at 1 g/dl, and then the reduced viscosity was measured. As a result, the reduced viscosity was 0.35 dL/g.

### <Synthetic example 2>

Except that the moisture content in the system after the addition of pure water was adjusted to 200 ppm by adding 0.555 g of pure water, the PAI resin was obtained in the same manner as the Synthetic example 1. The reduced viscosity of this PAI resin was measured in the same manner as the Synthetic example 1, and as a result, the reduced viscosity was 0.32 dL/g.

### <Synthetic example 3>

Except that the moisture content in the system after the addition of pure water was adjusted to 5000 ppm by adding 14.955 g of pure water, the PAI resin was obtained in the same manner as the Synthetic example 1. The reduced viscosity of this PAI resin was measured in the same manner as the Synthetic example 1, and as a result, the reduced viscosity was 0.38 dL/g.

### <Synthetic example 4>

Except that the moisture content in the system after the addition of pure water was adjusted to 50 ppm by adding 0.105 g of pure water, the PAI resin was obtained in the same manner as the Synthetic example 1. The reduced viscosity of this PAI resin was measured in the same manner as the Synthetic example 1, and as a result, the reduced viscosity was 0.24 dL/g.

### <Synthetic example 5>

Except that the moisture content in the system after the addition of pure water was adjusted to 8000 ppm by adding 23.955 g of pure water, the PAI resin was obtained in the same manner as the Synthetic example 1. The reduced viscosity of this PAI resin was measured in the same manner as the Synthetic example 1, and as a result, the reduced viscosity was 0.45 dL/g.

### <Synthetic example 6>

Except that the polymerization reaction was continued for 2 hours while maintaining the temperature of the content at 120°C, the PAI resin was obtained in the same manner as the Synthetic example 1. The reduced viscosity of this PAI resin was measured in the same manner as the Synthetic example 1, and as a result, the reduced viscosity was 0.13 dL/g.

### <Synthetic example 7>

Except that the polymerization reaction was continued for 24 hours while maintaining the temperature of the content at 120°C, the PAI resin was obtained in the same manner as the Synthetic example 1. The reduced viscosity of this PAI resin was measured in the same manner as the Synthetic example 1, and as a result, the reduced viscosity was 0.50 dL/g.

### <Example 1>

50 parts by weight of the PAI resin which has been produced in the Synthetic example 1 and 50 parts by weight of the PAS resin (trade name: DIC-PPS-LR300G, manufactured by Dainippon Inki Kagaku Kogyo K.K.) were blended, and the resin composition was melt kneaded at 320°C by using a twin-screw extruder to produce a pellet (i.e., the resin composition).
The pellets were subjected to injection molding by using an injection molding machine (trade name: IS-100F3, manufactured by Toshiba Machine Company) with the cylinder temperature of 340°C and the mold temperature of 140°C to obtain a ring-shape test specimen having outer diameter of 26 mm x inner diameter of 20 mm x height of 15 mm.
By using this ring-shape test specimen, measurement of sliding wear amount was carried out. The measurement of sliding wear amount was carried out under the condition including test temperature of 100°C, test speed of 1000 mm/sec, SUS304 as a counter material, test period of 24 hours and test load of 10 kgf using a frictional wear amount tester (trade name: EFM-III-EN, manufactured by Orientec Co.). The results are shown in Table 1.
Furthermore, the pellets were subjected to injection molding to obtain a JIS dumbbell test specimen. Then, using this dumbbell test specimen, measurement of tensile strength and tensile elongation was carried out. The measurement of tensile strength and tensile elongation was carried out using a tensile tester (trade name: Autograph AG-5000B, manufactured by Shimadzu Corporation) under the condition including measurement temperature of 23°C, test speed of 20 mm/min and distance between clip jigs of 100 mm. The results are shown in Table 1. Furthermore, the tensile strength is a parameter to evaluate the mechanical strength of the resin composition while the tensile elongation is a parameter to evaluate the toughness of the resin composition.
Still furthermore, by using the pellets that have been obtained from the above, measurement of melt fluidity was carried out. The measurement of melt fluidity was carried out using a melt fluidity measurement device (trade name: Capillograph 1B, manufactured by Toyo Seiki Co., Ltd.) under the condition including capillary length of 10 mm, capillary diameter of 1.0 mm, shear rate of 1000 sec⁻¹, and test temperature of 320°C. The results are shown in Table 1.

### <Example 2>

Except that the PAI of the Synthetic example 2 was used as PAI, the resin composition was produced in the same manner as the Example 1. Then, the sliding wear amount, tensile strength, tensile elongation and melt fluidity were evaluated. The results are shown in Table 1.

### <Example 3>

Except that the PAI of the Synthetic example 3 was used as PAI, the resin composition was produced in the same manner as the Example 1. Then, the sliding wear amount, tensile strength, tensile elongation and melt fluidity were evaluated. The results are shown in Table 1.

### <Example 4>

Except that each of the blend ratio of the PAI and PAS was adjusted to those shown in Table 1, the resin composition was produced in the same manner as the Example 1. Then, the sliding wear amount, tensile strength, tensile elongation and melt fluidity were evaluated. The results are shown in Table 1.

### <Example 5>

Except that each of the blend ratio of the PAI and PAS was adjusted to those shown in Table 1, the resin composition was produced in the same manner as the Example 2. Then, the sliding wear amount, tensile strength, tensile elongation and melt fluidity were evaluated. The results are shown in Table 1.

### <Example 6>

Except that each of the blend ratio of the PAI and PAS was adjusted to those shown in Table 1, the resin composition was produced in the same manner as the Example 3. Then, the sliding wear amount, tensile strength, tensile elongation and melt fluidity were evaluated. The results are shown in Table 1.

### <Comparative example 1>

Except that the PAI of the Synthetic example 5 was used as PAI, the resin composition was produced in the same manner as the Example 1. Then, the sliding wear amount, tensile strength, tensile elongation and melt fluidity were evaluated. The results are shown in Table 1.

### <Comparative example 2>

Except that the PAI of the Synthetic example 6 was used as PAI, the resin composition was produced in the same manner as the Example 1. Then, the sliding wear amount, tensile strength, tensile elongation and melt fluidity were evaluated. The results are shown in Table 1.

### <Comparative example 3>

Except that the PAI of the Synthetic example 7 was used as PAI, the resin composition was produced in the same manner as the Example 1. Then, the sliding wear amount, tensile strength, tensile elongation and melt fluidity were evaluated. The results are shown in Table 1.

### <Comparative example 4>

Except that each of the blend ratio of the PAI and PAS was adjusted to those shown in Table 1 by using the PAI of the Synthetic example 5, the resin composition was produced in the same manner as the Example 1. Then, the sliding wear amount, tensile strength, tensile elongation and melt fluidity were evaluated. The results are shown in Table 1.

### <Comparative example 5>

Except that the PAI of the Synthetic example 4 was used as PAI, the resin composition was produced in the same manner as the Example 1. Then, the sliding wear amount, tensile strength, tensile elongation and melt fluidity were evaluated. The results are shown in Table 1.

**[Table 1]**

| | Example 1 | Example 2 | Example 3 | Example 4 | Example 5 | Example 6 | Comparative example 1 | Comparative example 2 | Comparative example 3 | Comparative example 4 | Comparative example 5 |
|---|---|---|---|---|---|---|---|---|---|---|---|
| PAI synthesis method | Synthetic example 1 | Synthetic example 2 | Synthetic example 3 | Synthetic example 1 | Synthetic example 2 | Synthetic example 3 | Synthetic example 5 | Synthetic example 6 | Synthetic example 7 | Synthetic example 5 | Synthetic example 4 |
| PAI blending amount (wt%) | 50 | 50 | 50 | 20 | 20 | 20 | 50 | 50 | 50 | 20 | 50 |
| PAS blending amount (wt%) | 50 | 50 | 50 | 80 | 80 | 80 | 50 | 50 | 50 | 80 | 50 |
| Sliding wear amount (mm³/kg·km) | 0.80 | 1.00 | 0.90 | 1.20 | 1.40 | 1.50 | 2.10 | 4.50 | 2.00 | 15.7 | 3.30 |
| Tensile strength (MPa) | 90 | 90 | 90 | 90 | 90 | 90 | 80 | 50 | 70 | 80 | 70 |
| Tensile elongation (%) | 4.0 | 3.7 | 3.8 | 4.2 | 3.8 | 4.0 | 2.0 | 1.3 | 1.8 | 2.5 | 2.0 |
| Melt fluidity value at 320° C (poise) | 1500 | 1500 | 1500 | 1400 | 1400 | 1400 | 4000 | 1000 | 8000 | 900 | 1300 |

## Claims

1. A resin composition comprising:
(1) an aromatic polyamide imide resin (A) that is obtained with the moisture content in a reaction system at 100 to 5000 ppm during the reaction to polymerize an aromatic tricarboxylate anhydride and a diisocyanate and for which the reduced viscosity in N,N-dimethyl acetamide at 30°C is 0.15 to 0.40 dL/g; and
(2) a polyarylene sulfide resin (B).

2. The resin composition according to Claim 1, wherein the blend ratio of the aromatic polyamide imide resin (A) is 5 to 60% by weight and the blend ratio of the polyarylene sulfide resin (B) is 95 to 40% by weight when the total of the aromatic polyamide imide resin (A) and polyarylene sulfide resin (B) is 100% by weight.

3. The resin composition according to Claim 1 or 2, wherein the moisture content in the reaction system is 500 to 5000 ppm.

4. The resin composition according to any one of Claims 1 to 3, wherein the reduced viscosity of the aromatic polyamide imide resin (A) is 0.25 to 0.40 dL/g.

5. A molded article comprising the resin composition according to any one of Claims 1 to 4.

6. A method of producing a resin composition comprising:
(1) an aromatic polyamide imide resin (A); and
(2) a polyarylene sulfide resin (B),
wherein the aromatic polyamide imide resin (A) is produced such that the moisture content in a reaction system is 100 to 5000 ppm during the reaction to polymerize an aromatic tricarboxylate anhydride and a diisocyanate and the reduced viscosity in N,N-dimethyl acetamide at 30°C is 0.15 to 0.40 dL/g.

7. The method of producing a resin composition according to Claim 6, wherein the resin composition is produced such that the blend ratio of the aromatic polyamide imide resin (A) is 5 to 60% by weight and the blend ratio of the polyarylene sulfide resin (B) is 95 to 40% by weight when the total of the aromatic polyamide imide resin (A) and polyarylene sulfide resin (B) is 100% by weight.

8. The method of producing a resin composition according to Claim 6 or 7, wherein the moisture content in the reaction system is 500 to 5000 ppm during the reaction to polymerize an aromatic tricarboxylate anhydride and a diisocyanate.
